# EUROPÄISCHE PATENTSCHRIFT

(11) **EP 2 850 676 B1**
(45) Veröffentlichungstag und Bekanntmachung des Hinweises auf die Patenterteilung: **25.08.2021**
(21) Anmeldenummer: 13727548.3
(22) Anmeldetag: 22.05.2013
(51) Int. Cl.: H01M 4/04, H01M 4/38, H01M 4/62, H01M 8/18, H01M 12/08, H01M 4/02

(54) **SPEICHERSTRUKTUR EINER ELEKTRISCHEN ENERGIESPEICHERZELLE**
STORAGE STRUCTURE OF AN ELECTRICAL ENERGY STORAGE CELL
STRUCTURE ACCUMULATRICE D'UN ÉLÉMENT ACCUMULATEUR D'ÉNERGIE ÉLECTRIQUE

(30) Priorität: 29.06.2012 DE 102012211328
(43) Veröffentlichungstag der Anmeldung: 25.03.2015
(73) Patentinhaber: Siemens Energy Global GmbH & Co. KG, 81739 München (DE)
(72) Erfinder: SCHUH, Carsten, 85598 Baldham (DE); SOLLER, Thomas, 94489 Deggendorf (DE)
(86) Internationale Anmeldenummer: PCT/EP2013/060512
(87) Internationale Veröffentlichungsnummer: WO 2014/000989

(56) Entgegenhaltungen:
- EP-A1- 2 789 581
- WO-A1-2013/045208
- WO-A1-2013/045223
- WO-A1-2013/084733
- WO-A1-2013/093044
- WO-A2-2012/146465
- DE-A1-102009 057 720
- DE-A1-102011 085 224
- US-A1- 2012 034 520
- NANSHENG XU ET AL: "A novel solid oxide redox flow battery for grid energy storage", ENERGY & ENVIRONMENTAL SCIENCE, Bd. 4, Nr. 12, 1. Januar 2011 (2011-01-01) , Seite 4942, XP055064967, ISSN: 1754-5692, DOI: 10.1039/c1ee02489b

## Beschreibung

Die Erfindung betrifft eine Speicherstruktur einer elektrischen Energiespeicherzelle nach dem Oberbegriff des Patentanspruchs 1.

Überschüssige elektrische Energie, die beispielsweise aus erneuerbaren Energiequellen hervorgeht, lässt sich nur im bedingten Umfang im Stromnetz speichern. Dies gilt auch für überschüssige Energie, die dann bei fossilen Kraftwerken anfällt, wenn diese im optimalen wirtschaftlichen Lastbereich laufen, vom Verbraucher jedoch aus dem Netz nicht abgerufen wird. Für die Zwischenspeicherung dieser überschüssigen Energien in größeren Mengen gibt es verschiedene Großspeichervorrichtungen. Eine davon ist zum Beispiel ein Pumpspeicherkraftwerk. Auf dem Batteriesektor besteht ein Ansatz für einen elektrischen Energiespeicher darin, sogenannte Rechargeable Oxide Batteries (ROB) also Hochtemperatur-Metall-Luft-Batterien einzusetzen. Bei diesen Batterien wird ein metallbasiertes Speichermedium je nach Batteriezustand (Laden oder Entladen) reduziert oder oxidiert. Bei einer Vielzahl dieser zyklischen Lade- und Entlade- also Reduktions- und Oxidationsvorgänge des Speichermediums neigt dieses Medium bei den anliegenden vergleichsweise hohen Betriebstemperaturen einer solchen Batterie, die üblicherweise zwischen 600°C und 900°C liegen, dazu, dass die geforderte Mikrostruktur, insbesondere die Porenstruktur des Speichermediums und die Partikelgrößenverteilung des aktiven Speichermaterials,durch Sinterprozesse zerstört wird. Dies führt zu einer Alterung und anschließend zu einem Versagen der Batterie.

Speicherstrukturen von elektrischen Metall-Luft-Energiespeicherzellen aus aktivem Speichermaterial und Inertmaterial sind in folgenden Dokumenten offenbart: US 2012/034520 A1, WO 2012/146465 A2, WO 2013/045208 A1, EP 2 789 581 A1. Die Aufgabe der Erfindung besteht darin, eine Speicherzelle eines elektrischen Energiespeichers bereitzustellen, die gegenüber dem Stand der Technik eine höhere Langzeitbeständigkeit aufweist und einer höheren Zyklenzahl von Lade- und Entladevorgängen stand hält.

Die Lösung der Aufgabe besteht in einer Speicherstruktur mit den Merkmalen des Patentanspruchs 1.

Die Lösung der Aufgabe besteht in einer Speicherstruktur einer elektrischen Metall-Luft-Energiespeicherzelle, die ein aktives Speichermaterial und ein Inertmaterial umfasst. Die Erfindung zeichnet sich dadurch aus, dass Partikel des Inertmaterials ein Aspektverhältnis aufweisen, das < 0,7 ist und das Teilbereiche der Inertpartikel in ein Kornvolumen von Körnern des aktiven Speichermaterials inkorporiert sind.

Die Inertpartikel weisen dabei ein Längen- zu Breitenverhältnis auf (Aspektverhältnis A_{R} = dₘᵢₙ/dₘₐₓ), das für längliche Partikel charakteristisch ist. Hierbei ist der mittlere minimale Durchmesser einer Kornverteilung (dₘᵢₙ) deutlich kleiner ist als der durchschnittliche maximale Durchmesser der Kornverteilung (dₘₐₓ). Die Inertpartikel weisen dabei eine Form auf, die gemeinhin als whiskerförmig, nadelförmig oder plateletförmig bezeichnet werden kann. Auch faserartige Partikel weisen das beschriebene Aspektverhältnis auf. Diese Inertpartikel sind zudem in die Partikel bzw. Körner des aktiven Speichermaterials inkorporiert, das bedeutet, sie sind zum Teil von dem Volumen des Kornes des aktiven Speichermaterials umschlossen, bzw. wie Stifte in diese hineingesteckt. Die Inertpartikel dienen somit als Abstandhalter zwischen den Körnern des aktiven Speichermaterials und verhindern durch die räumliche Trennung der Körner des aktiven Speichermaterials ein Versintern bzw. ein Vergröbern der Körner des aktiven Speichermaterials.

Hierbei wird unter dem Begriff "inert" verstanden, dass sich ein chemisches Gleichgewicht zwischen dem inerten Material und einem möglichen Reaktanden so langsam einstellt, so dass es bei den vorherrschenden Betriebstemperaturen zu keinen Reaktionen kommt, die die Funktionalität der Speicherstruktur nachhaltig beeinflussen. Darunter wird insbesondere ein inertes Verhalten gegenüber einem gasförmigen oder flüssigen Reaktanden verstanden, der wiederum eine Reaktion mit dem Speichermaterial eingeht. Außerdem wird hierunter ein inertes Verhalten gegenüber dem Speichermaterial an sich verstanden. Insbesondere kommt als inertes Speichermaterial Zirkonoxid, yttriumverstärktes Zirkonoxid, Calciumoxid, Magnesiumoxid, Aluminiumoxid, Yttriumoxid oder Mischungen aus diesen keramischen inerten Materialien oder Materialien, die auf der Basis der genannten Materialien aufgebaut sind, in Frage.

In einer bevorzugten Ausgestaltungsform der Erfindung ist der Benetzungswinkel zwischen dem aktiven Speichermaterial und dem Inertmaterial größer oder gleich 90°. Ein deutlich kleinerer Benetzungswinkel zwischen dem Inertmaterial und dem Speichermaterial würde nach mehreren Reaktionszyklen zu einer Ausbreitung des aktiven Speichermaterials über das Inertmaterial führen, wodurch die abstandshaltende Wirkung des Inertmaterials nicht mehr ohne weiteres gegeben wäre.

Erfindungsgemäß besteht das aktive Speichermaterial auf der Basis von Eisenoxid. Während des Betriebes der Speicherzelle kommt es während des Ladens bzw. Entladens stets zu einer Reduktion des Eisenoxids bzw. zu einer Oxidation des Eisenoxides also einer Änderung der Oxidationsstufe des Eisens in elementarer oder oxidisch gebundener Form. Bei der Herstellung der Speicherstruktur kann demnach Eisenoxid oder Eisen als aktives Speichermaterial verwendet werden, somit ist die Speicherzelle in ihrem Ausgangszustand entweder entladen oder geladen. In einer vorteilhaften Ausgestaltung der Erfindung liegt das Eisenoxid bei der Herstellung der Speicherstruktur üblicherweise in Form von Fe₂O₃ (Eisen(III)-Oxid) vor, während des Betriebes der Speicherzelle verändert sich in der Regel die Oxidationsstufe des Eisens, weshalb der Betrieb der Speicherzelle mit den Verbindungen FeO (Eisen(II)-Oxid) und/oder Fe₃O₄ (Eisen(II, III)-Oxid) erfolgt. Das aktive Speichermaterial liegt insbesondere in Form eines Redoxpaares vor, das aus Eisen und Eisenoxid besteht, wobei der Anteil der jeweiligen Komponenten abhängig vom Ladezustand der elektrischen Speicherzelle ist.

In einer weiteren Ausgestaltungsform der Erfindung weist das Inertmaterial eine Partikelgrößenverteilung auf, deren d₉₀-Wert < 10 µm beträgt. Dabei wird unter dem Begriff d₉₀ verstanden, dass 90% der Partikel bzw. Körner des Inertmaterials einen Korndurchmesser von weniger als 10 µm aufweisen. Bei dem genannten d₉₀-Wert handelt es sich um eine Korngröße, die bei den Inertpartikeln vor Herstellung der Speicherstruktur vorliegt. Während des Betriebes in der Speicherzelle kann sich die Korngrößenverteilung der Speicherstruktur aufgrund der beschriebenen Reaktivität in der Zelle verändern.

In einer weiteren Ausgestaltungsform der Erfindung weist der Volumenanteil des Inertmaterials an dem Volumen der Speicherstruktur weniger als 30%, insbesondere weniger als 20% auf. Ein geringerer Volumenanteil des Inertmaterials ermöglicht einen höheren Anteil an aktivem Speichermaterial. Voraussetzung dafür ist, dass das Inertmaterial bei dem relativ geringen Volumenanteil funktional seiner Stützwirkung und seiner Abstandswirkung gegenüber den Körnern des aktiven Speichermaterials nachkommt. Im Gegenzug dazu weist das aktive Speichermaterial einen Anteil am Volumen der Speicherstruktur auf, der größer als 50%, insbesondere größer als 60% ist.

Ein Verfahren zur Herstellung einer Speicherstruktur einer elektrischen Metall-Luft-Speicherzelle, umfasst folgende Schritte:
Zunächst wird ein aktives Speichermaterial mit einem Inertmaterial gemischt. Hieraus wird durch ein keramisches Herstellungsverfahren ein sogenannter Grünkörper hergestellt. Gegebenenfalls kann der Grünkörper noch durch eine Wärmebehandlung, die auch als Sinterprozess bezeichnet werden kann, in seiner mechanischen Stabilität verfestigt werden, in dem zwischen den Materialkörnern Sinterhälse ausgebildet werden, die mechanisch stabilisierend wirken. Dieser Grünkörper wird in die Speicherzelle eingelegt. Anschließend folgt ein Betrieb der Speicherzelle für mindestens einen Lade- und Entladevorgang bei einer Prozesstemperatur von mehr als 500°C, bevorzugt zwischen 600 und 900°C. Es hat sich herausgestellt, dass sich die gewünschten whiskerförmigen bzw. platletförmigen Inertpartikel mit dem geforderten Aspektverhältnis insbesondere bei Betriebsbedingungen der Speicherzelle ausbilden, wenn die beschriebenen vorteilhaften Materialpaarungen und physikalischen Eigenschaften vorliegen.

Weitere Merkmale der Erfindung und weitere Vorteile werden anhand der folgenden Figuren näher erläutert. Bei der Figurenbeschreibung handelt es sich um beispielhafte Ausgestaltungsformen der Erfindung, die keine Einschränkung des Schutzbereiches darstellen.

Dabei zeigen:
Figur 1 eine schematische Darstellung der Wirkungsweise einer elektrischen Speicherzelle,
Figur 2 eine vergrößerte schematische Darstellung der Mikrostruktur der Speicherstruktur.

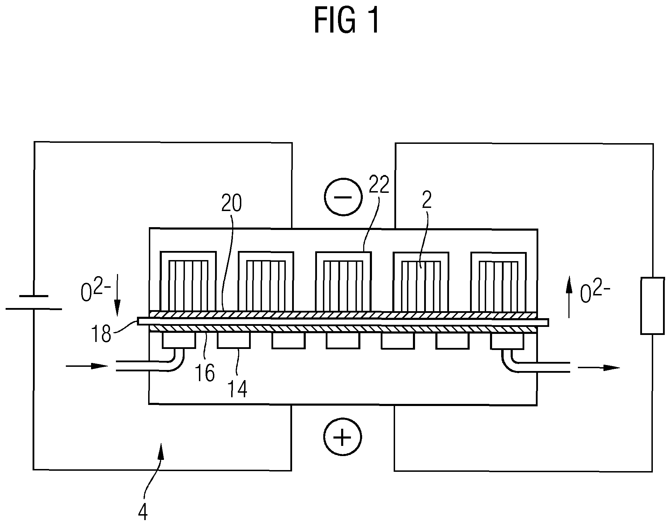

Anhand von Figur 1 soll zunächst schematisch die Wirkungsweise einer Rechargeable Oxide Batterie (ROB) beschrieben werden, insoweit dies für die vorliegende Beschreibung der Erfindung notwendig ist. Ein üblicher Aufbau einer ROB besteht darin, dass an einer positiven Elektrode, die auch als Luftelektrode 16 bezeichnet wird, ein Prozessgas, insbesondere Luft, über eine Gaszufuhr 14 eingeblasen wird, wobei beim Entladen (Stromkreis auf der rechten Bildseite) der Luft Sauerstoff entzogen wird. Der Sauerstoff gelangt in Form von Sauerstoffionen O²⁻ durch einen an der positiven Elektrode anliegenden Feststoffelektrolyten 18, zu einer negativen Elektrode 20, die auch als Speicherelektrode bezeichnet wird. Diese steht über ein gasförmiges Redoxpaar, z.B. ein Wasserstoff-Wasserdampf-Gemisch mit dem porösen Speichermedium in Verbindung. Würde an der negativen Elektrode 20 eine dichte Schicht des aktiven Speichermaterials vorliegen, so würde die Ladekapazität der Batterie schnell erschöpft werden.

Aus diesem Grund ist es erfindungsgemäß vorgesehen, an der negativen Elektrode 20 als Energiespeichermedium eine Speicherstruktur 2 aus porösem Material einzusetzen, das ein funktional wirkendes oxidierbares Material als ein aktives Speichermaterial 6, bevorzugt in Form von Eisen und/oder Eisenoxid enthält.

Über ein beim Betriebszustand der Batterie gasförmiges Redoxpaar, beispielsweise H_{2/}H₂O, werden die, durch den Festkörperelektrolyten 18 transportierten Sauerstoffionen nach ihrer Entladung an der negativen Elektrode in Form von Wasserdampf durch Porenkanäle 10 der porösen Speicherstruktur 2, die das aktive Speichermaterial 6 umfasst, transportiert. Je nachdem, ob ein Entlade- oder Ladevorgang vorliegt, wird das Metall bzw. das Metalloxid (Eisen/Eisenoxid) oxidiert oder reduziert und der hierfür benötigte Sauerstoff durch das gasförmige Redoxpaar H_{2/}H₂O angeliefert oder zum Festkörperelektrolyten 18 bzw. zur negativen Elektrode 20 zurück transportiert. Dieser Mechanismus des Sauerstofftransportes über ein Redoxpaar wird als Shuttlemechanismus bezeichnet.

Der Vorteil des Eisens als oxidierbares Material, also als aktives Speichermaterial 6, besteht darin, dass es bei seinem Oxidationsprozess in etwa dieselbe Ruhespannung von etwa 1 V aufweist, wie das Redoxpaar H_{2/}H₂O bei einem Partialdruckverhältnis von 1, andernfalls ergibt sich ein erhöhter Widerstand für den Sauerstofftransport durch die diffundierenden Komponenten dieses Redoxpaares.

Die Diffusion der Sauerstoffionen durch den Feststoffelektrolyten 18 benötigt eine hohe Betriebstemperatur von 600 bis 900°C der beschriebenen ROB, aber auch für die optimale Zusammensetzung des Redoxpaares H₂/H₂O in Gleichgewicht mit dem Speichermaterial ist dieser Temperaturbereich vorteilhaft. Hierbei ist nicht nur die Struktur der Elektroden 16 und 20 und des Elektrolyten 18 einer hohen thermischen Belastung ausgesetzt, sondern auch die Speicherstruktur 2, die das aktive Speichermaterial 6 umfasst. Bei den stetigen Zyklen von Oxidation und Reduktion neigt das aktive Speichermaterial dazu, zu versintern und/oder zu vergröbern. Versintern bedeutet, dass die einzelnen Körner immer mehr miteinander durch Diffusionsprozesse verschmelzen, die reaktive Oberfläche sinkt und die für den Gastransport erforderliche durchgehend offene Porenstruktur verschwindet. Vergröbern bedeutet, dass einzelne Körner auf Kosten anderer Körner wachsen, wobei die Anzahldichte und die reaktive Oberfläche der Körner abnimmt. Bei einer geschlossenen Porenstruktur kann das Redoxpaar H_{2/}H₂O die aktive Oberfläche des aktiven Speichermaterials 6 nicht mehr erreichen, so dass bereits nach einer Teilentladung des Speichers der Innenwiderstand der Batterie sehr hoch wird, was eine weitere technisch sinnvolle Entladung verhindert.

Ein Vorteil der ROB besteht darin, dass sie durch ihre kleinste Einheit, nämlich die Speicherzelle modular nahezu unbegrenzt erweiterbar ist. Somit ist eine kleine Batterie für den stationären Hausgebrauch ebenso darstellbar wie eine großtechnische Anlage zur Speicherung der Energie eines Kraftwerkes.

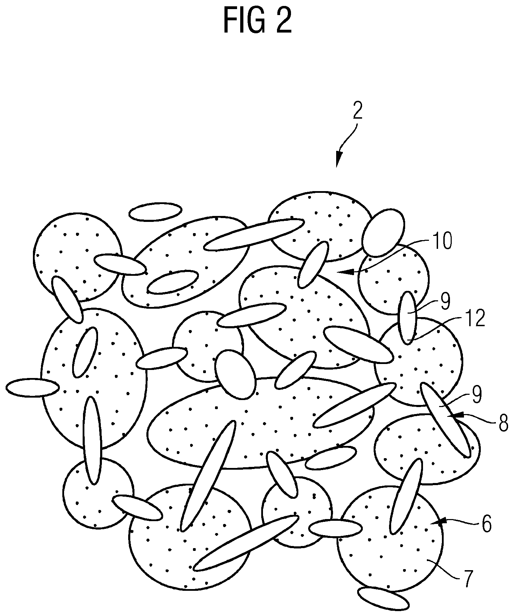

In Figur 2 ist vergrößert eine charakteristische Mikrostruktur der Speicherstruktur dargestellt. Die Speicherstruktur 2 weist dabei insbesondere das aktive Speichermaterial 6 auf, das gegenüber den Partikeln 9 des Inertmaterials 8 größere Körner 7 aufweist. Das aktive Speichermaterial 6 liegt grundsätzlich in beliebiger Kornform vor, es sind in der schematischen Darstellung gemäß Figur 2 große ovale Kornquerschnitte dargestellt. Zwischen den Körnern 7 des aktiven Speichermaterials 6 liegen Poren 10 vor, es handelt sich hierbei um eine offene Porosität, durch die das Shuttlegas, insbesondere H_{2/}H₂O strömen kann.

Durch den Lade- und Entladeprozess kommt es zur Reduktion bzw. Oxidation der Körner 7 des aktiven Speichermaterials 6, das während der Oxidation seine Oxidationsstufe erhöht und im Zuge der Reduktion seine Oxidationsstufe wieder erniedrigt. Dieser Oxidations- und Reduktionsprozess ist mit einer stetigen Volumenveränderung der Körner 7 des aktiven Speichermaterials 6 verbunden. Damit die Körner 7 des aktiven Speichermaterials 6 nicht miteinander versintern bzw. verschmelzen, ist ein Inertmaterial 8 eingebracht, das in Form von whiskerförmigen Partikeln 9 vorliegt. Die in Figur 2 dargestellten Partikel 9 des Inertmaterials 8 weisen üblicherweise ein Aspektverhältnis von 0,2 auf. Es handelt es sich somit um nadelförmige Körner bzw. Partikel 9, die in die Körner 7 des aktiven Speichermaterials 8 inkorporiert sind. Die nadelförmigen Körner 9 stecken somit in den Körnern 7 des aktiven Speichermaterials 6 ähnlich zu Zahnstochern in Oliven. Auf diese Art und Weise kann der Partikel 9 des Inertmaterials 8 auch nach mehreren Oxidations- und Reduktionszyklen die einzelnen Körner 7 des aktiven Speichermaterials 6 voneinander beabstanden, da auch nach mehreren Lade-/Entladezyklen keine Ausbreitung des aktiven Speichermaterials 6 (Eisenoxid) über dem Inertmaterial 8 (in diesem Ausführungsbeispiel Zirkonoxid) stattfindet. Es findet auch keine chemische Reaktion zwischen dem Inertmaterial Zirkonoxid und dem Shuttlegas H_{2/}H₂O statt.

Es hat sich als zweckmäßig herausgestellt, einen Grünkörper aus einer Mischung des aktiven Speichermaterials (Fe₂O₃) und dem Inertmaterial 8 (Zirkonoxid) herzustellen. Bei der Formgebung der Speicherstruktur bzw. bei der Formgebung des Grünkörpers der Speicherstruktur kann grundsätzlich jedes in der keramischen Formgebung übliche Verfahren angewandt werden. Hierzu sei insbesondere das uniaxiale Pressen, das isostatische Pressen aber auch das Tape Casting oder ein Extrusionsverfahren genannt. Der so hergestellte Grünkörper kann grundsätzlich auch durch einen Sinterprozess bzw. einen Vorsinterprozess in seiner mechanischen Stabilität verbessert werden. Es hat sich als zweckmäßig herausgestellt, die endgültige charakteristische Mikrostruktur der Speicherstruktur 2 gemäß Figur 2 während eines Testbetriebes der elektrischen Speicherzelle 4 darzustellen. Bei einer (mitunter mehrmaligen) gezielten Oxidation bzw. Reduktion des Grünkörpers der Speicherstruktur 2 bzw. des aktiven Speichermaterials zur Speicherstruktur 2 stellt sich eine gewünschte Korneigenschaft des Inertmaterials 8 ein, wobei die Partikel 9 des Inertmaterials 8 in die Körner 7 des aktiven Speichermaterials 6 inkorporiert werden und sich die charakteristische nadelförmige Form ausbildet, die das gewünschte Aspektverhältnis von weniger als 0,7 insbesondere von weniger als 0,5 aufweist. Die Ausgangspartikelgröße des Inertmaterials liegt in vorteilhafter Weise bei weniger als 200 nm.

## Patentansprüche

1. Speicherstruktur einer elektrischen Metall-Luft-Energiespeicherzelle (4), wobei die Metall-Luft-Energiespeicherzelle (4) eine Luftelektrode (16) als positive Elektrode, einen Feststoffelektrolyten (18), welcher an der positiven Elektrode anliegt, und eine negative Elektrode (20), welche als Energiespeichermedium eine Speicherstruktur (2) aus porösem Material umfasst, aufweist; wobei die Speicherstruktur (2)
ein aktives Speichermaterial (6), welches ein funktional wirkendes oxidierbares Material ist, und ein Inertmaterial (8), welches ein inertes Verhalten gegenüber einem gasförmigen oder flüssigen Reaktanden, der wiederum eine Reaktion mit dem aktiven Speichermaterial (6) eingeht, und gegenüber dem aktiven Speichermaterial (6) an sich aufweist, umfasst; **dadurch gekennzeichnet, dass**
das aktive Speichermaterial (6) auf der Basis von Eisenoxid besteht, Partikel (9) des Inertmaterials (8) ein AspektVerhältnis aufweisen, das kleiner als 0,7 ist, wobei das Aspekt-Verhältnis ein Verhältnis eines mittleren minimalen Durchmessers einer Kornverteilung zu einem durchschnittlichen maximalen Durchmesser der Kornverteilung beschreibt, und dass Teilbereiche (12) der Partikel (9) des Inertmaterials (8) in ein Kornvolumen von Körnern (7) des aktiven Speichermaterials (6) inkorporiert sind, so dass sie zum Teil von einem Volumen des Kornes (7) des aktiven Speichermaterials (6) umschlossen sind.

2. Speicherstruktur nach Anspruch 1, **dadurch gekennzeichnet, dass** das Inertmaterial (8) auf der Basis von Zirkonoxid, yttriumverstärktem Zirkonoxid, Calciumoxid, Magnesiumoxid, Aluminiumoxid, Yttriumoxid oder Kombinationen hiervon besteht.

3. Speicherstruktur nach einem der vorhergehenden Ansprüche, **dadurch gekennzeichnet, dass** das Inertmaterial (8) aus Inertpartikeln hergestellt ist, deren Partikelgrößenverteilung vor der Herstellung der Speicherstruktur einen d90-Wert aufweist, der weniger als 10 µm beträgt.

4. Speicherstruktur nach einem der vorhergehenden Ansprüche, **dadurch gekennzeichnet, dass** der Volumenanteil des Inertmaterials (8) an dem Volumen der Speicherstruktur weniger als 30 %, insbesondere weniger als 20 % beträgt.

5. Speicherstruktur nach einem der vorhergehenden Ansprüche, **dadurch gekennzeichnet, dass** der Volumenanteil des aktiven Speichermaterials (6) an dem Volumen der Speicherstruktur größer als 50 %, insbesondere größer als 60 % ist.

## Claims

1. Storage structure of an electrical metal/air energy storage cell (4), wherein the metal/air energy storage cell (4) has an air electrode (16) as positive electrode, a solidstate electrolyte (18) adjoining the positive electrode, and a negative electrode (20) comprising a storage structure (2) composed of porous material as energy storage medium;
wherein the storage structure (2) comprises an active storage material (6) which is a functional oxidizable material, and an inert material (8) which has inert behaviour with respect to a gaseous or liquid reactant which in turn enters into a reaction with the active storage material (6), and with respect to the active storage material (6) per se; **characterized in that**
the active storage material (6) is based on iron oxide, particles (9) of the inert material (8) have an aspect ratio less than 0.7, where the aspect ratio describes a ratio of an average minimum diameter of a grain distribution to an average maximum diameter of the grain distribution, and **in that** partial regions (12) of the particles (9) of the inert material (8) are incorporated into a grain volume of grains (7) of the active storage material (6) such that they are partly enclosed by a volume of the grain (7) of the active storage material (6).

2. Storage structure according to Claim 1, **characterized in that** the inert material (8) is based on zirconia, yttriastabilized zirconia, calcium oxide, magnesium oxide, alumina, yttria or combinations thereof.

3. Storage structure according to either of the preceding claims, **characterized in that** the inert material (8) has been produced from inert particles having a particle size distribution prior to the production of the storage structure having a d90 of less than 10 µm.

4. Storage structure according to any of the preceding claims, **characterized in that** the proportion by volume of the inert material (8) in the volume of the storage structure is less than 30%, especially less than 20%.

5. Storage structure according to any of the preceding claims, **characterized in that** the proportion by volume of the active storage material (6) in the volume of the storage structure is greater than 50%, especially greater than 60%.

## Revendications

1. Structure accumulatrice d'un élément (4) accumulateur d'énergie électrique métal-air, dans lequel l'élément (4) accumulateur d'énergie métal-air a une électrode (16) à air comme électrode positive, un électrolyte (18) solide, qui s'applique à l'électrode positive et une électrode (20) négative, qui comprend comme milieu accumulateur d'énergie une structure (2) accumulatrice en matière poreuse ;
dans laquelle la structure (2) accumulatrice comprend une matière (6) accumulatrice active, qui est une matière oxydable ayant un effet fonctionnel, et une matière (8) inerte, qui a un comportement inerte vis-à-vis d'un produit en réaction gazeux ou liquide, qui entre à nouveau en réaction avec la matière (6) accumulatrice active, et vis-à-vis de la matière (6) accumulatrice active en soi ;
**caractérisée en ce que**
la matière (6) accumulatrice active est à base d'oxyde de fer, des particules (9) de la matière (8) inerte ont un rapport d'aspect plus petit que 0,7, le rapport d'aspect décrivant un rapport d'un diamètre médian minimum d'une répartition granulométrique à un diamètre moyen maximum de la répartition granulométrique, et **en ce que** des régions (12) partielles des particules (9) de la matière (8) inerte sont incorporées dans un volume de grains (7) de la matière (6) accumulatrice active de manière à être entourée en partie d'un volume du grain (7) de la matière (6) accumulatrice active.

2. Structure accumulatrice suivant la revendication 1, **caractérisée en ce que** la matière inerte est à base d'oxyde de zirconium, d'oxyde de zirconium renforcé par de l'yttrium, d'oxyde de calcium, d'oxyde de magnésium, d'oxyde d'aluminium, d'oxyde d'yttrium ou de leurs combinaisons.

3. Structure accumulatrice suivant l'une des revendications précédentes, **caractérisée en ce que** la matière (8) inerte est préparée en particules inertes, dont la répartition granulométrique a, avant la production de la structure accumulatrice une valeur d90, qui est plus petite que 10 µm.

4. Structure accumulatrice suivant l'une des revendications précédentes, **caractérisée en ce que** la proportion en volume de la matière (8) inerte par rapport au volume de la structure accumulatrice est plus petite que 30%, notamment plus petite que 20%.

5. Structure accumulatrice suivant l'une des revendications précédentes, **caractérisée en ce que** la proportion en volume de la matière (6) accumulatrice active par rapport au volume de la structure accumulatrice est plus grande que 50%, notamment plus grande que 60%.
